# EUROPEAN PATENT SPECIFICATION

(11) **EP 3 194 213 B1**
(45) Date of publication and mention of the grant of the patent: **27.06.2018**
(21) Application number: 15753773.9
(22) Date of filing: 05.08.2015
(51) Int. Cl.: B60R 1/076

(54) **A PIVOT ASSEMBLY FOR A VEHICLE EXTERNAL REAR VISION DEVICE AND A PIVOT TIE THEREFORE**
SCHWENKANORDNUNG FÜR EINE EXTERNE RÜCKFAHRKAMERAVORRICHTUNG EINES FAHRZEUGS UND SCHWENKVERBINDUNG DAFÜR
ENSEMBLE DE PIVOTEMENT POUR UN DISPOSITIF DE VISION ARRIÈRE EXTERNE DE VÉHICULE ET LIAISON DE PIVOTEMENT ASSOCIÉE

(30) Priority: 06.08.2014 AU 2014903044
(43) Date of publication of application: 26.07.2017
(73) Proprietor: SMR Patents S.à.r.l., 2453 Luxembourg (LU)
(72) Inventor: FLYNN, Daniel Joseph, Victoria 3401, Australia (AU); DI GIUSTO, Nathan, Lonsdale South, Australia 5160 (AU)
(74) Representative: Weber-Bruls, Dorothée
(86) International application number: PCT/IB2015/055930
(87) International publication number: WO 2016/020847

(56) References cited:
- EP-A1- 2 110 283
- EP-A1- 2 439 106

## Description

### TECHNICAL FIELD

The present invention relates to vehicle rear view devices. In particular, the present invention relates to vehicle side-mountable rear vision devices, such as mirrors or cameras, that are pivotably movable with respect to a mounting point on a vehicle's side.

### BACKGROUND

Vehicle rear view devices, in particular vehicle rear view side mirrors, commonly include a mirror head that is pivotally attached to a mounting bracket or mirror base. The mounting bracket or base is secured to the vehicle body (for instance, the door or front fender). The pivot enables the mirror head to rotate with respect to the bracket to either allow movement of the mirror head in response to an impact while the vehicle is moving or stationary (referred to as "mirror breakaway"), or to move to a parked position under the action of a drive means to ensure that the mirror head and its internal case frame is moved to a position where it is as close to the vehicle body as possible.

A detent is typically included in a pivot mechanism within the vehicle rear vision device described above. The detent provides a positive location and holding force for the rear vision device in at least a deployed or drive position as it is rotated about the pivot. The detent resists initial movement of the pivot and requires a minimum force in order to overcome the detent holding force.

Commonly, detent mechanisms include a detent feature on the mounting bracket or mirror base and a further detent feature on the mirror head or mirror case frame.

While a pivot mechanism that enables the mirror head, or any rear vision device including a camera, to rotate with respect to the bracket about a pivot axis clearly has many advantages, it does provide the designer with challenges in relation to the durability and strength of the overall rear vision assembly. In particular, the assembly in a deployed or drive position, must be able to withstand a torque applied to the mirror head, and hence the internal case frame, about an axis orthogonal to the pivot axis by an external down force.

The document EP 2 439 106 A1 discloses a rearview mirror assembly with a base frame portion and a rotatable case frame portion. The case frame is lockable in a position relative to the base frame by a detent mechanism formed by protrusions on the base frame interacting with recesses of a clutch mechanism. Base frame and case frame are clamped together by a spring mechanism with a torsion spring arranged along the pivot axis and around a spigot, with a power fold housing being arranged between the base frame and the case frame. EP2110283 A1 discloses a pivot mechanism according to the preamble of claim 1. It is an object of the invention to provide a pivot mechanism that is directed to the problem referred to above or to at least provide the public with a useful choice.

### SUMMARY

According to a first aspect of the invention, there is provided a pivot mechanism for a vehicle external rear vision assembly according to claim 1.

### BRIEF DESCRIPTION OF DRAWINGS

Embodiments of the present invention will be discussed with reference to the accompanying drawings wherein:
Figure 1 is an exploded isometric view of a pivot mechanism according to a first embodiment of the invention looking from above.
Figure 2 is an exploded isometric view of the pivot mechanism shown in Figure 1 looking from below.
Figures 3, 4 and 5 are isometric, side and plan views respectively of the pivot mechanism shown in Figures 1 and 2, with the pivot mechanism in a deployed or drive position.
Figure 6 is a cross-sectional view through section lines B-B shown on Figure 5.
Figure 7A is a cross-sectional view through section lines A-A shown on Figure 5 while the pivot mechanism is in its normal drive position.
Figure 7B is a magnified view of the portion of the pivot mechanism indicated by circle C7 on Figure 7A.
Figure 8A is a cross-sectional view through section lines A-A shown on Figure 5 with a down force applied to the mirror head, the down force inducing a torque about an axis orthogonal to the pivot axis.
Figure 8B is a magnified view of the portion of the pivot mechanism indicated by circle C8 on Figure 8A.
Figures 9 and 10 are cross-sectional views through section lines C-C and D-D respectively as shown on Figure 7A.
Figure 11 is an exploded isometric view of a pivot mechanism according to a second embodiment of the invention looking from above.
Figure 12 is an exploded isometric view of the pivot mechanism shown in Figure 11 looking from below.

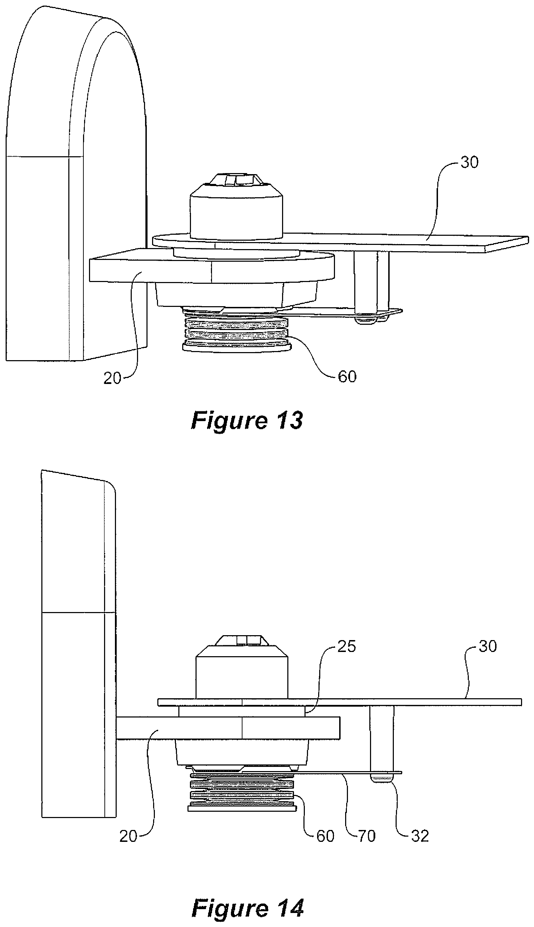

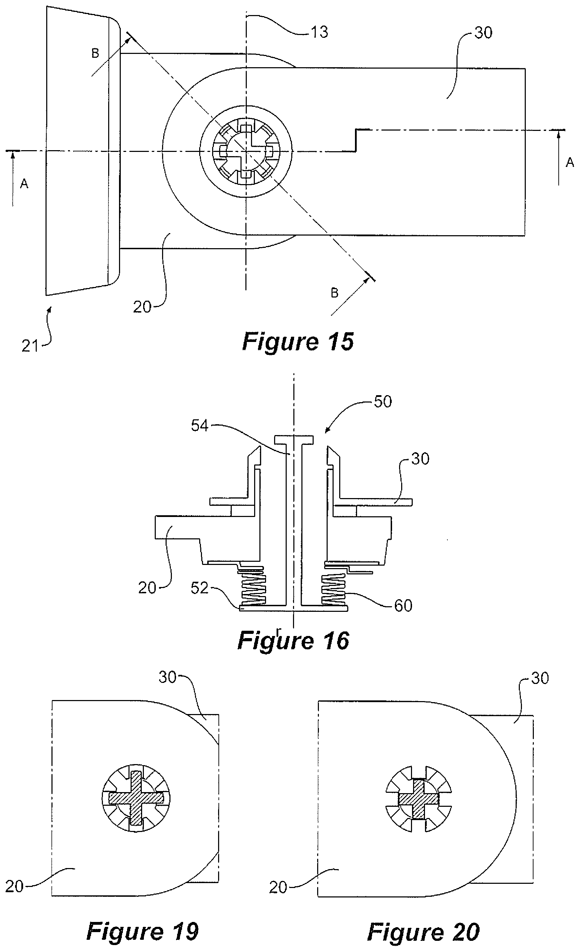

Figures 13, 14 and 15 are isometric, side and plan views of the pivot mechanism shown in Figures 11 and 12, with the pivot mechanism in a deployed or drive position.
Figure 16 is a cross-sectional view through section lines B-B shown on Figure 15.

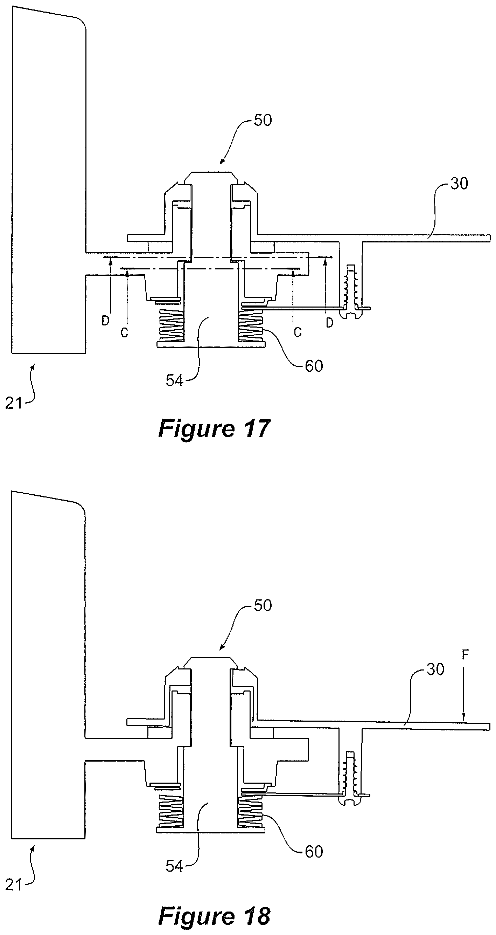

Figure 17 is a cross-sectional view through section lines A-A shown on Figure 15 while the pivot mechanism is in its normal drive position.
Figure 18 is a cross-sectional view through section lines A-A shown on Figure 15 with a down force applied to the mirror head, the down force inducing a torque about an axis orthogonal to the pivot axis.
Figures 19 and 20 are cross-sectional views through section lines C-C and D-D shown on Figure 7A.
Figure 21 is an exploded isometric view of a pivot mechanism according to a third embodiment of the invention looking from above.
Figure 22 is an exploded isometric view of the pivot mechanism shown in Figure 21 looking from below.
Figures 23, 24 and 25 are isometric, side and plan views respectively of the pivot mechanism shown in Figures 21 and 22, with the pivot mechanism in a deployed or drive position.
Figure 26A is a cross-sectional view through section lines A-A shown on Figure 25 while the pivot mechanism is in its normal drive position.
Figure 26B is a magnified view of the portion of the pivot mechanism indicated by circle C26 on Figure 26A.
Figure 26C is a similar view to that of Figure 26B, but with a down force applied to the mirror head.
Figure 27 is a cross-sectional views through section lines B-B shown on Figure 26.
Figure 28 is an exploded isometric view of a pivot mechanism according to a fourth embodiment of the invention looking from above.
Figure 29 is an exploded isometric view of the pivot mechanism shown in Figure 28 looking from below.

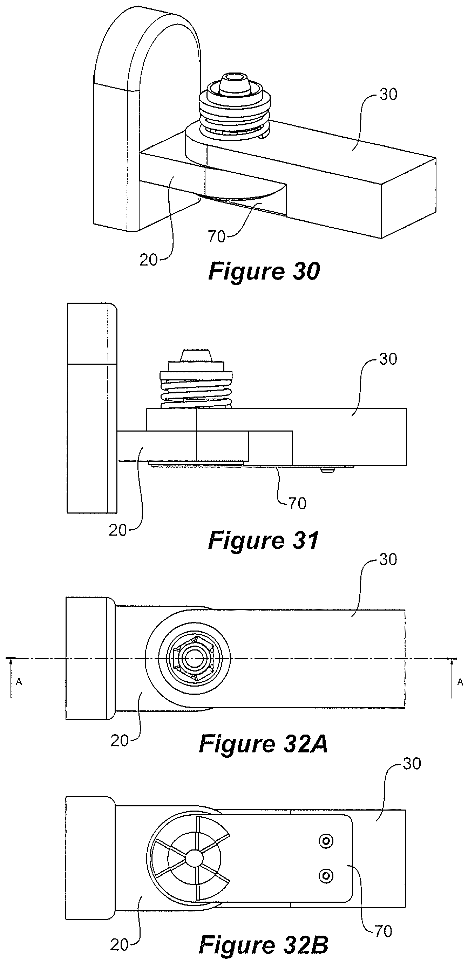

Figures 30, 31 and 32A are isometric, side and plan views respectively of the pivot mechanism shown in Figures 28 and 29, with the pivot mechanism in a deployed or drive position.
Figure 32B is an underside view of the pivot mechanism shown in Figures 28 and 29.

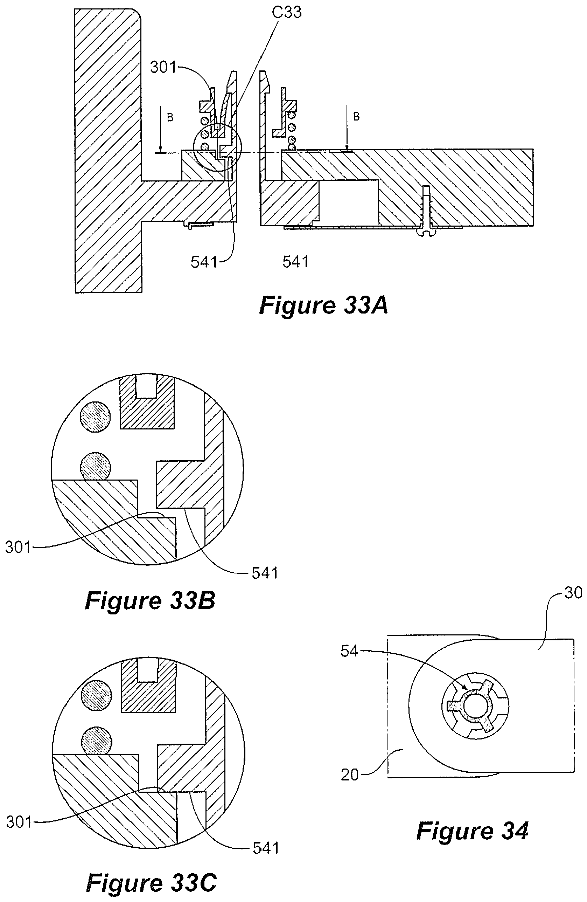

Figure 33A is a cross-sectional view through section lines shown on Figure 32A.
Figure 33B is a magnified view of the portion of the pivot mechanism indicated by circle C33 on Figure 33A.
Figure 33C is a similar view to that of Figure 33B, but with a down force applied to the mirror head.
Figure 34 is a cross-sectional view through section lines B-B shown on Figure 33A while the pivot mechanism is in its normal drive position.
Figure 35 is an isometric view of an alternative pivot tie for the pivot mechanism of the first and second embodiments of the invention looking from above.
Figure 36A is an exploded isometric view of a pivot mechanism according to a fifth embodiment of the invention that includes a powerfold mechanism mounted to the base frame portion.
Figure 36B is an exploded isometric view of the pivot mechanism of Figure 36A that includes a simple spring tie 50 without spring tie reaction features.

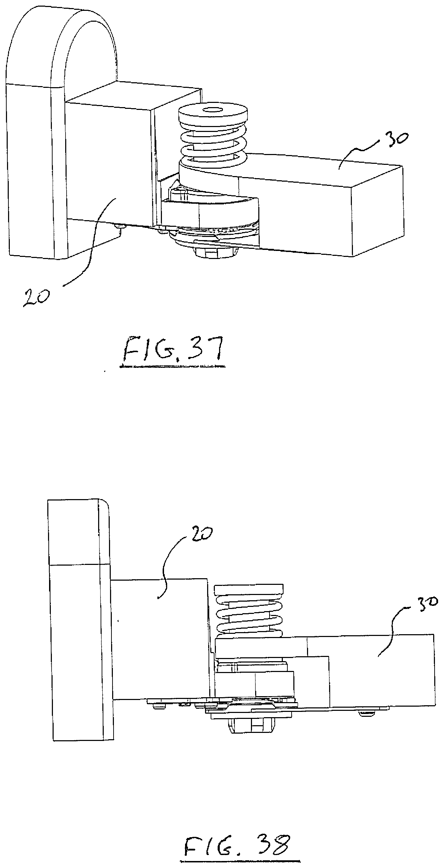

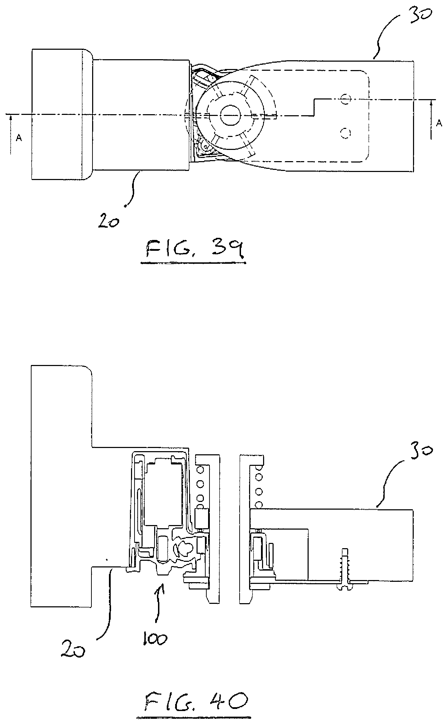

Figures 37, 38 and 39 are isometric, side and plan views of the pivot mechanism shown in Figure 36B, with the pivot mechanism in a deployed or drive position.
Figure 40 is a cross-sectional view through section lines A-A shown on Figure 39.
Figure 41A is an exploded isometric view of a pivot mechanism according to a sixth embodiment of the invention that includes a powerfold mechanism mounted to the base frame portion.
Figure 41B is an exploded isometric view of the pivot mechanism of Figure 41A that includes a simple spring tie 50 without spring tie reaction features.

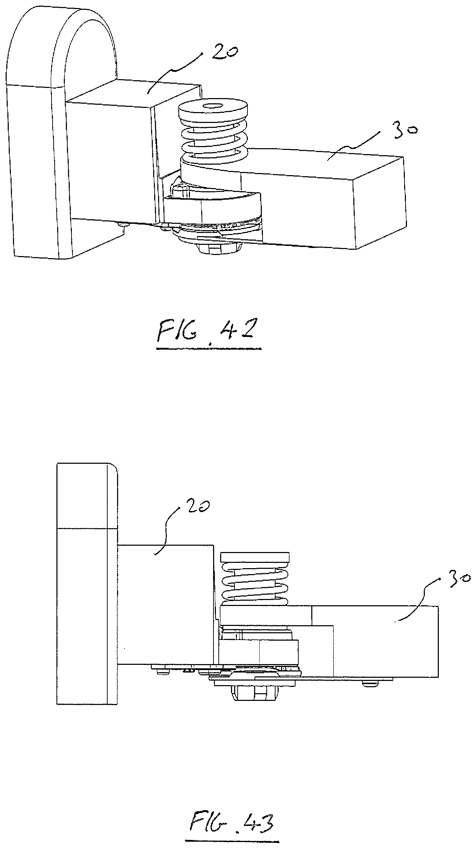

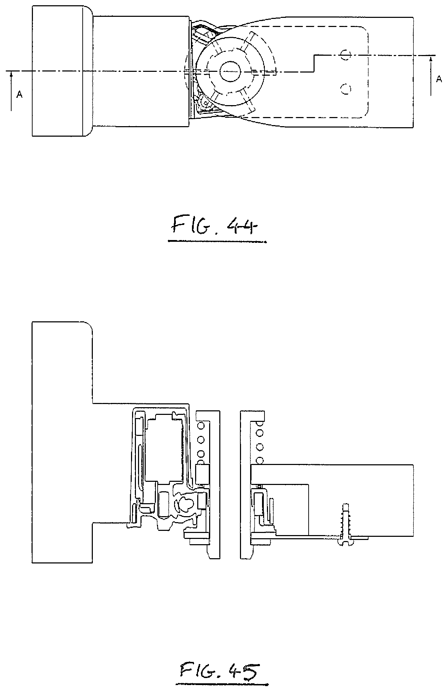

Figures 42, 43 and 44 are isometric, side and plan views of the pivot mechanism shown in Figure 41B, with the pivot mechanism in a deployed or drive position.
Figure 45 is a cross-sectional view through section lines A-A shown on Figure 44.

### DESCRIPTION OF EMBODIMENTS

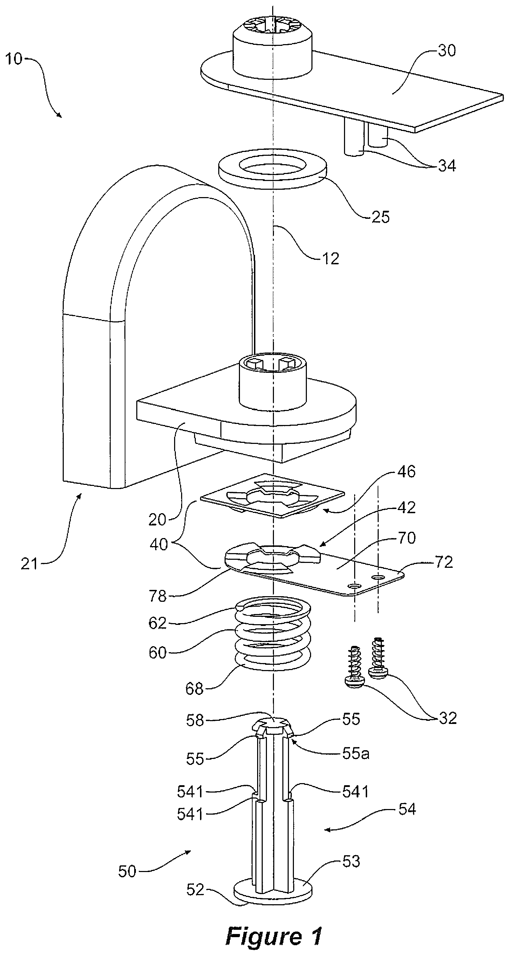

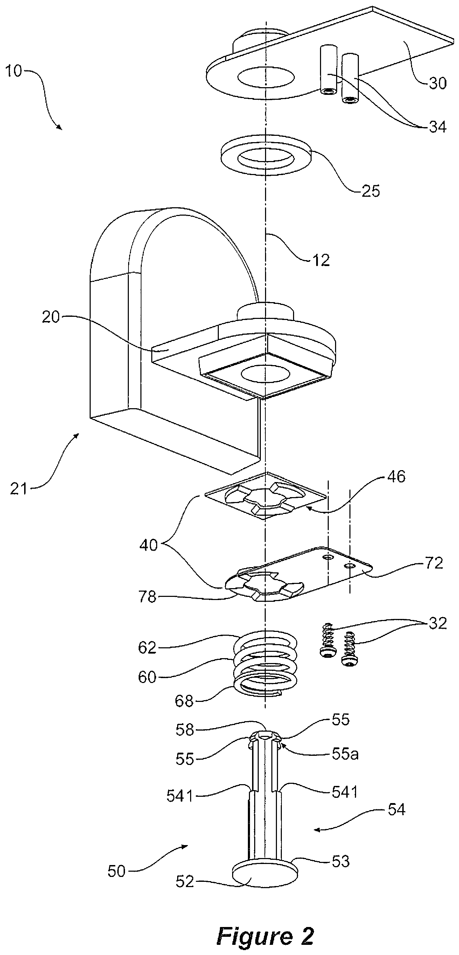

Referring now to Figures 1 and 2, there is shown a pivot mechanism 10 for a vehicle external rear view device assembly according to a first embodiment of the invention. The mechanism includes a base frame portion 20 for a vehicle-mountable base frame 21 and a case frame portion 30 mounted to the base frame portion 20 for rotation about a pivot axis 12. The base frame portion 20 may be integral with a base frame, or may be a separate component attached to, or attachable to, other base frame portions. Similarly, the case frame portion 30 may be integral with a case frame, or may be a separate component attached to, or attachable to, other case frame portions.

Typically, the case frame supports a mirror and a decorative case housing. The case frame, mirror and decorative housing are all rotatable together with respect to the base frame, which is typically fixed to a vehicle door. Equally, the case frame may support an alternative rear view device in the form of a camera.

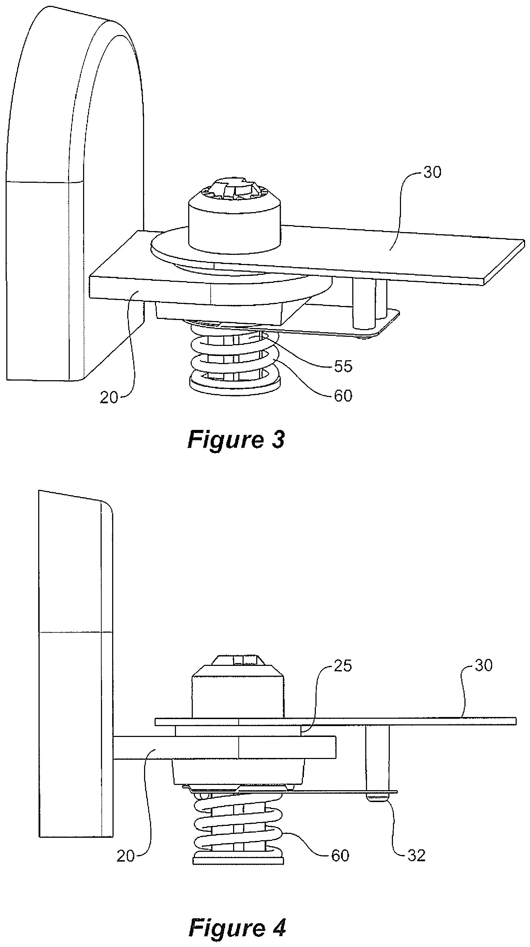

A detent 40 operable between the base frame portion 20 and the case frame portion 30 is provided. The detent 40 has an engaged position shown in Figures 3 to 10. In this engaged position, the case frame portion 30 is held in a selected position with respect to the base frame portion 20.

As can be seen from Figures 1 and 2, the detent 40 includes a first set of detent features 42 and a second set of detent features 46. The first set of detent features 42 are fixed against rotation with respect to the case frame 30 about the pivot axis 12 but is axially movable with respect to both the case frame portion 30 and the base frame portion 20. The second set of detent features 46 are fixed against rotation with respect to the base frame portion 20. A spring assembly including a spring retainer or spring tie 50 and a spring 60 clamps the case frame portion 30 to the base frame portion 20 and also clamps the first set of detent features 42 to the second set of detent features 46.

The pivot mechanism 10 also includes a detent member support arm 70, having a first attachment end 72 and a second floating end 78. The first attachment end 72 is mounted to the case frame portion 30 for rotation therewith. The second floating end 78 is displaceable relative to the case frame portion 30 in a direction substantially parallel to the pivot axis 12.

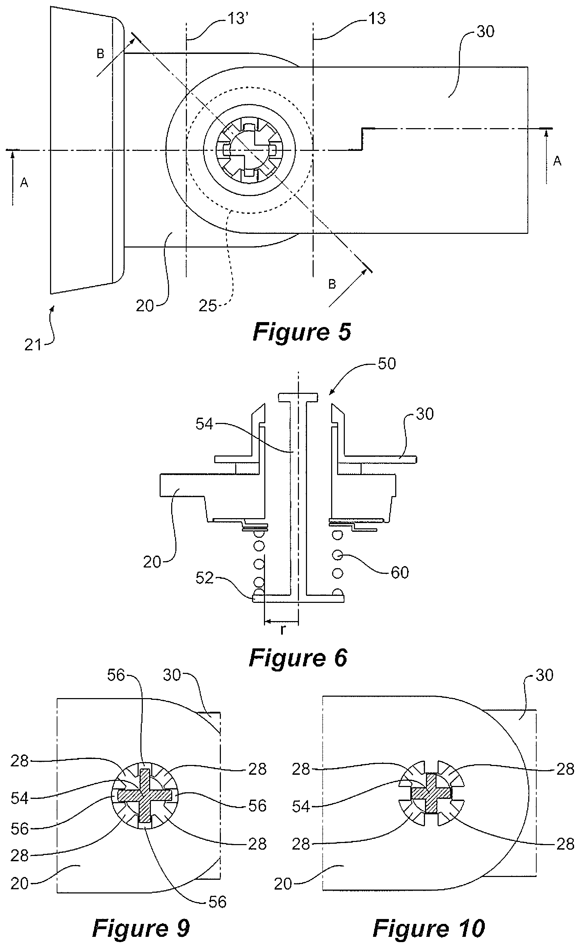

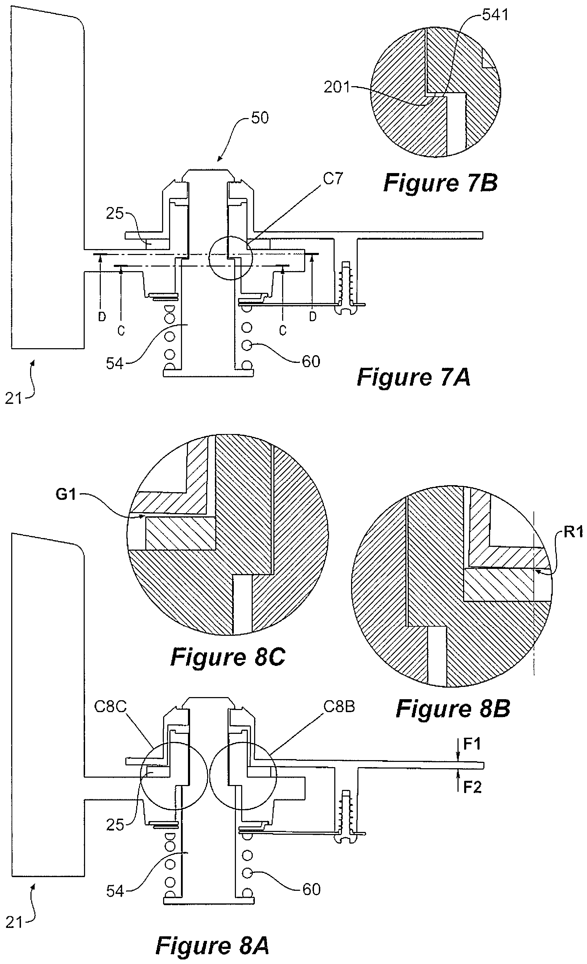

The spring assembly includes a spring retainer or spring tie 50 having a first retaining end 52 and a second retaining end 58, the first and second retaining ends 52,58 spaced apart from each other, and a compression spring 60 having a first spring end 62 and a second spring end 68. The spring assembly is disposed in compression between a flange 53 of the first retaining end 52 of the spring tie 50 and the base frame 20, as is most clearly shown in the cross-sectional views of Figures 6 and 7A read together with the exploded view of Figure 1. The first spring end 62 bears against the second floating end 78 of the support arm and the second spring end 68 bears against the first retaining end 52 of the spring tie 50.

The spring tie 50 has a first tie end 52 and a second tie end 58. The first and second tie ends 52,58 are spaced apart from each other and are connected by a tie shaft 54. The tie shaft 54 passes through the spring 60, as can be seen in the exploded view of Figure 1 and in isometric Figure 3.

A bearing washer 25 is disposed between the case frame portion 30 and the base frame portion 20, as is most clearly shown in Figures 1 and 4.

Now referring to the plan view of Figure 5, and the cross-sectional view of Figure 6 taken through section lines B-B as shown on Figure 5, it can be seen that the spring 60 has a spring internal radius r.

Now referring to Figure 7A, a further cross-sectional view taken through sectional lines A-A as shown on Figure 5, it can be seen that the spring tie shaft 54 of the spring tie 50 passes through the spring 60 and sits within the spring internal radius r. It can also be seen that the spring tie shaft includes a spring tie reaction feature in the form of four spring tie reaction surfaces 541, most clearly shown in Figures 1 and 7B (Figure 7B being a magnified view of the area indicated by circle C7 on Figure 7A). The spring tie reaction circle C7surfaces 541 are generally slightly spaced from corresponding case frame surfaces 301, as can be seen in Figure 7B. However, when the pivot mechanism 10 is in its deployed position, as is shown in Figure 5, external forces applied at arrow F1 shown on Figure 8A, induced by a person leaning on the mirror case, or camera case, for instance, will create a torque that will be resisted by the spring tie reaction features in the form of the spring tie reaction surfaces 541 illustrated in the magnified cross-sectional view of figure 7B. More specifically, a torque applied to the case frame portion 30 about an axis orthogonal to the pivot axis 12 by an external down force F1 is resisted by the spring tie reaction features in the form of the spring tie reaction surfaces 541. This is illustrated in Figure 8A and in the magnified Figures 8B and 8C. An example of an axis orthogonal to the pivot axis 12 is axis 13 illustrated on Figure 5.

In addition to the resistance offered by the spring tie reaction surfaces 541 as shown in Figures 8A and 8B, a reaction force is induced at the bearing washer 25 as is illustrated by arrow R1 shown on Figure 8B. A small gap, as indicated by arrow Gl on Figure 8C, may open up as a down force F1 is applied.

In a situation where an up force by indicated by arrow F2 on Figure 8A is applied to the rear vision device case (rather than a down force), the resultant torque acting on the case frame portion 30 about an axis 13' (shown in Figure 5) orthogonal to the pivot axis 12 is again resisted by the spring tie reaction surfaces 541.

Returning to Figure 1, it can be seen that the spring tie reaction surfaces 541 are
circumferentially spaced apart around the spring tie shaft 54.

Turning again to Figures 7A, 7B, 8A and 8B, it can be seen that the spring tie reaction surfaces 541 are located radially inboard of the internal radius r of the compression spring 60.

The cross-sectional views of Figures 9 and 10, taken through section lines C-C and D-D respectively, shown on Figure 7A, show how the spring tie reaction surfaces 541 (shown in Figure 7B) are captive when the case frame portion 30 is in its deployed position. Referring to Figure 9, it can be seen that voids 28 are provided to facilitate assembly. When the pivot tie shaft 54 is rotated 45 degrees from the position shown in Figure 9, the spring tie reaction surfaces 541 can move through the voids 28, whereas in the position shown in Figure 9, the underside surface 55a (shown in Figure 1) of the ramped projections 55 sit within recesses 56.Turning to Figures 1 and 2, it can be seen that the first set of detent features 42 is mounted on a detent member support arm 70. The detent member support arm 70 is attached to screw receiving bosses 34 by screws 32, as is most clearly shown in Figures 1 and 4.

The detent member support arm 70 is flexible, allowing the first set of detent features 42 to move axially away from the second set of detent features 46. The detent member support arm 70 is, however, relatively inflexible against rotational movement with respect to the case frame 30.

In other embodiments, not shown, the first and second detent members 42 and 46 may be swapped around such that the first set of detent features 42 sits on a support arm that allows radial movement with respect to the base frame portion 20 and the second set of detent features 46 may be fixed to the case frame 30.

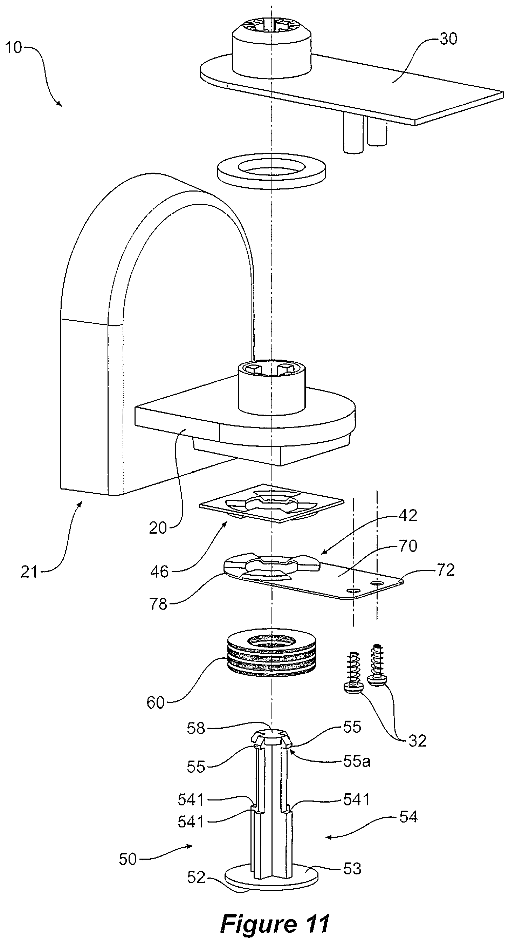

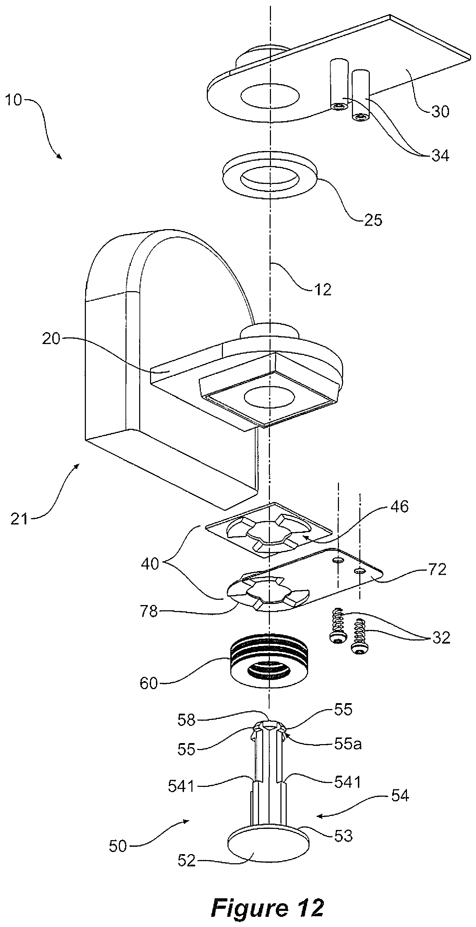

Referring now to Figures 11 and 12, there is shown a pivot mechanism 10 for a vehicle external rear view device assembly according to a second embodiment of the invention. This embodiment of the invention is similar to that shown in Figures 1 and 2 and Figures 3 to 10, but the coil spring 60 of the first embodiment of the invention is replaced by disc springs or bellevillewashers 60, as indicated in Figures 11 and 12. In other respects, this embodiment is identical to that of the first embodiment. In further embodiments, other compression springs such as wave springs may be used.

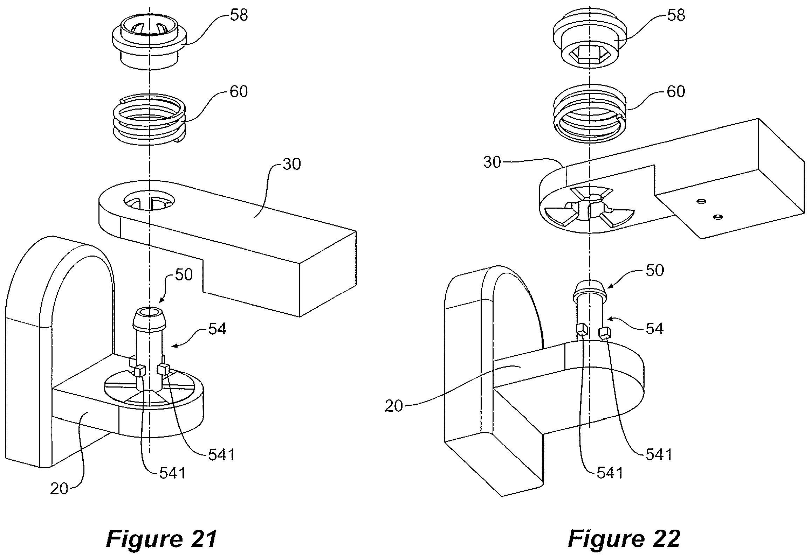

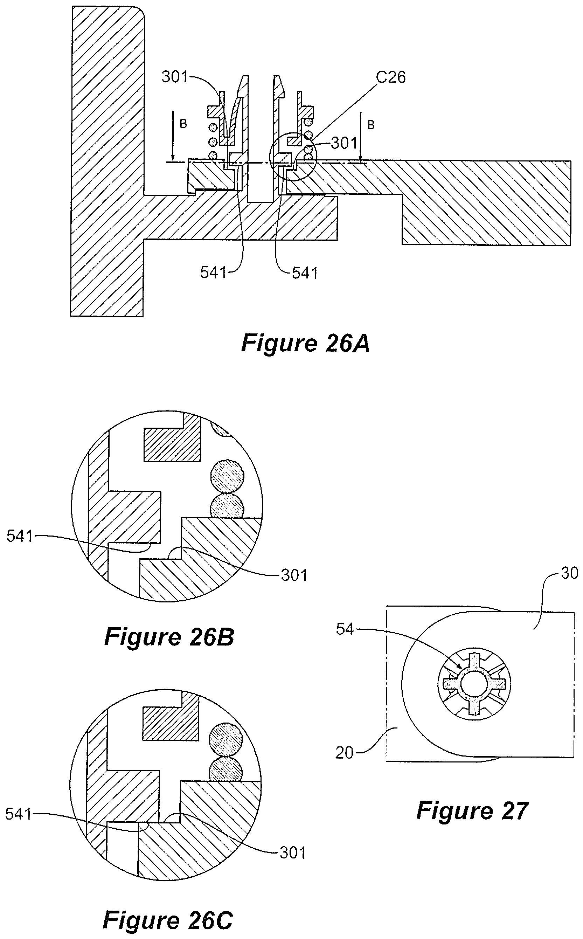

Now turning to Figures 21 and 22, a third embodiment of the invention is shown. This embodiment of the invention differs to the first and second embodiments of the invention in that the spring tie 50 is connected to or integral with the base frame portion 20. With this embodiment of the invention, the spring tie reaction surfaces 541 face downwards, as is shown in Figures 21, 22 and 26. Figure 26B and Figure 21C are close up views of the circled portion C26 indiated on Figure 26A.

Figure 26B shows clearance between case frame surface 30 land the spring tie reaction surface 541. This is the normal in-use condition without a significant torque-inducing up or down force applied to the rear vision device head. In contrast, Figure 26C shows case frame surface 301 lifted and hard up against the spring tie reaction surface 541 as a result of a significant torque-inducing up force applied to the mirror head (for instance by a person attempting to manually lift the head).

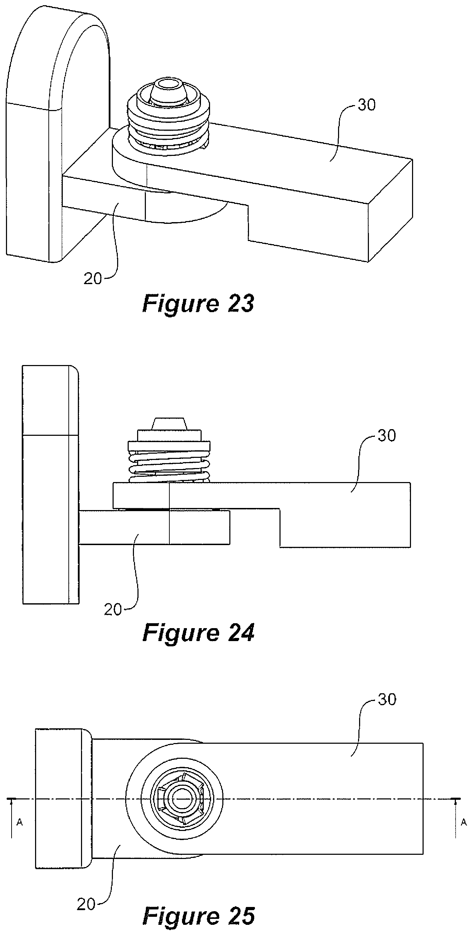

With the embodiment shown in Figures 21 to 27, the case frame portion 30 lifts with respect to the base frame portion 20 when the (mirror or camera) head is rotated away from the deployed or drive position. This is in contrast with the first and second embodiments described above where "zero lift" is achieved.

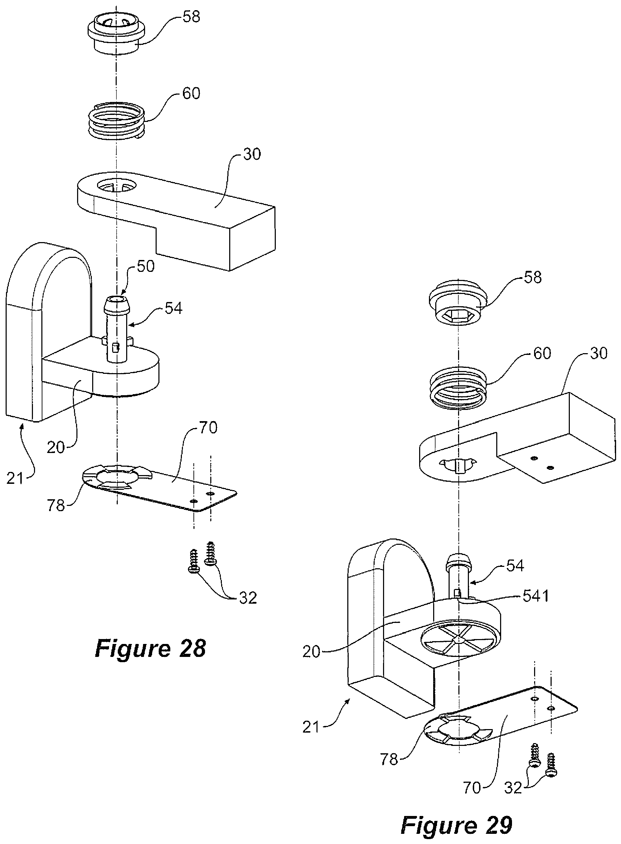

Now turning to Figures 28 and 29, a fourth embodiment of the invention is shown. This fourth embodiment of the invention is a "zero lift" embodiment like the first and second embodiments described above. With this embodiment of the invention, the detent sits at the interface between a lower portion of the base frame portion 20 and an upper surface of the floating end 78 of the support arm 70.

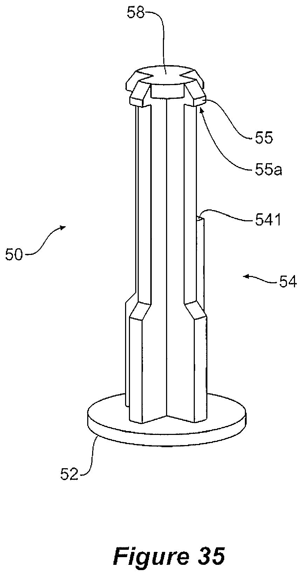

Now turning to Figure 35, an isometric view of an alternative pivot tie 50 for the pivot mechanism of the first and second embodiments of the invention is shown. This pivot tie 50
includes a spring tie reaction feature in the form of a single spring tie reaction surface 541. The number of spring tie reaction surfaces 541 can be varied. Two, three or more reaction surfaces 541 may be provided (aside from the four reaction surfaces 541 shown in Figures 1 and 1 land the one reaction surfaces 541 shown in Figure 35).

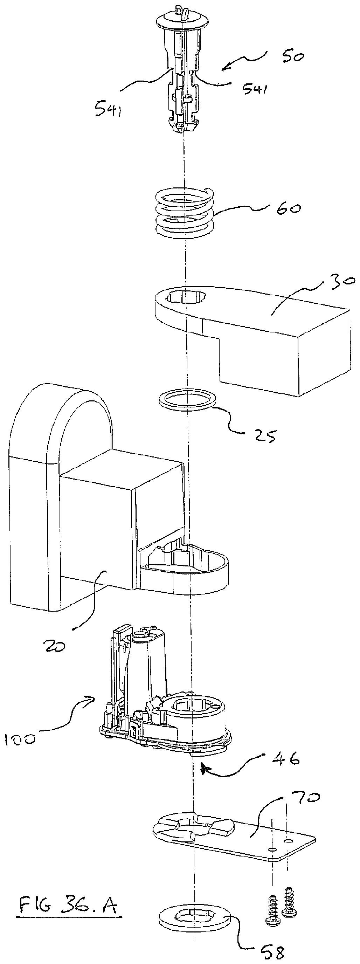

Figure 36A is an exploded isometric view of a pivot mechanism according to a fifth embodiment of the invention that includes a powerfold mechanism 100 mounted to the base frame portion 20. The spring tie 50 includes spring tie reaction features in the form of spring tie reaction surfaces 541.

The powerfold mechanism 100 is operably interposed between the base frame portion 20 and the case frame portion 30. The powerfold mechanism 100 includes the second set of detent features 46.

The powerfold mechanism 100 is operable to electrically drive the case frame portion 30 with respect to the base frame portion 20.

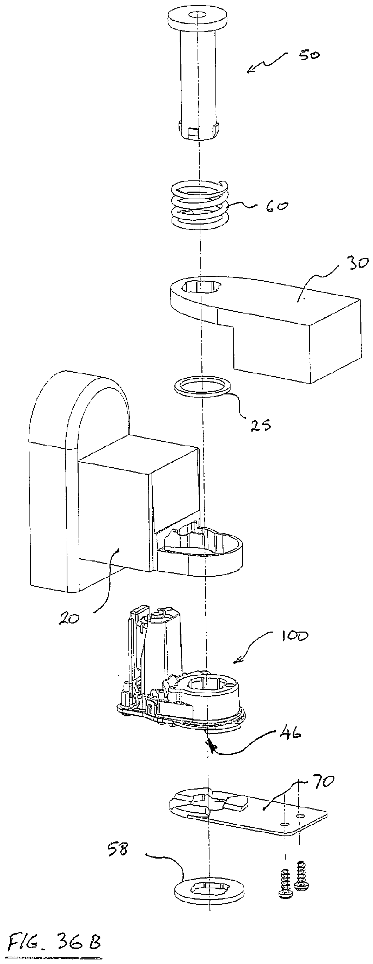

Figure 36B is an exploded isometric view of an alternative pivot mechanism that includes a powerfold mechanism 100 mounted to the base frame portion 20. The spring tie 50 shown in Figure 36B is the type shown in Figure 1 of the applicant's earlier application PCT/IB2014/061261 which is hereby incorporated by reference.

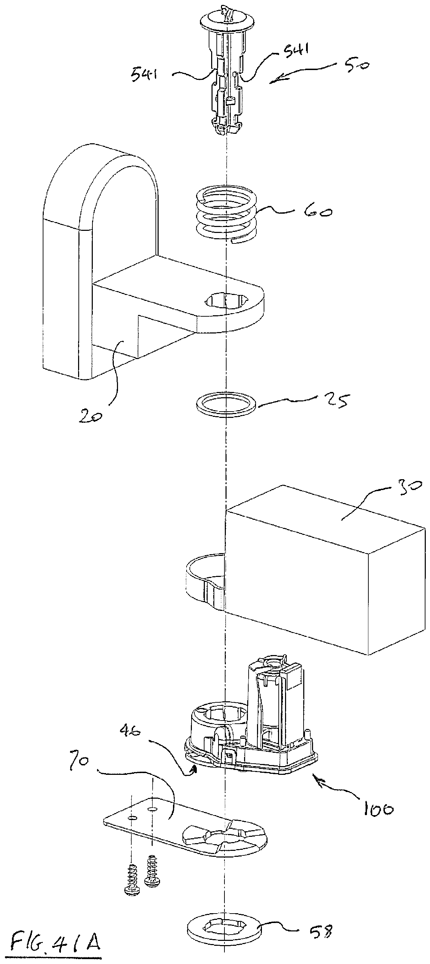

Figure 41A is an exploded isometric view of a pivot mechanism according to a sixth embodiment of the invention that includes a powerfold mechanism 100 mounted to the base frame portion 20. The spring tie 50 includes spring tie reaction features in the form of spring tie reaction surfaces 541.

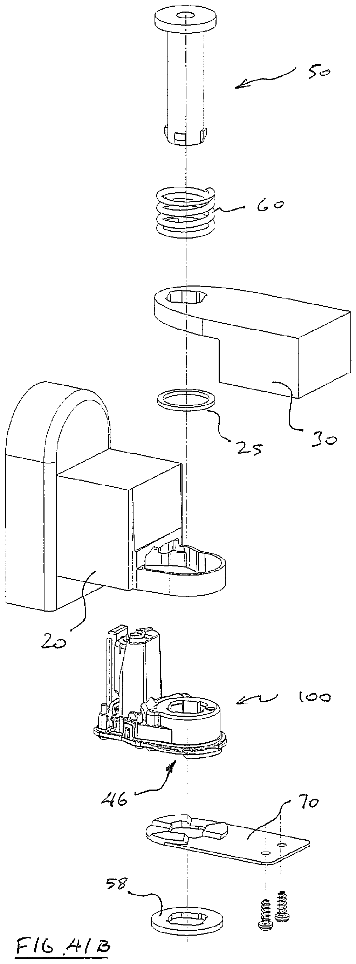

Figure 41B is an exploded isometric view of an alternative pivot mechanism that includes a powerfold mechanism 100 mounted to the base frame portion 20. The spring tie 50 shown in Figure 36B is the type shown in Figure 1 of the applicant's earlier application PCT/IB2014/061261 which is hereby incorporated by reference. Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

## Claims

1. A pivot mechanism (10) for a vehicle external rear vision assembly, the pivot mechanism (10) including:
a base frame portion (20) integral with, or attachable to, a vehicle-mountable base frame (21);
a case frame portion (30) mounted to the base frame portion (20) for rotation about a pivot axis (12), the case frame portion (30) integral with, or attachable to, a case frame adapted to support a rear vision device, the case frame movable about the pivot axis (12) from a deployed position to a folded position;
a spring mechanism clamping the case frame portion (30) to the base frame, whereby the spring mechanism is including:
a compression spring (60) disposed around the pivot axis (12), the compression spring (60) having an internal radius; and **characterized in that** the spring mechanism further includes a spring tie (50), the spring tie (50) having a first tie end (52) and a second tie end (58), the first and second tie ends (52, 58) spaced apart from each other and connected by a tie shaft (54), the tie shaft (54) passing through the spring (60), the spring tie shaft including a spring tie reaction feature,
whereby, in a deployed position, the spring tie reaction feature is positioned such that rotation of the case frame portion about an axis (13) orthogonal to the pivot axis (12) is resisted by the spring tie reaction feature.

2. The pivot mechanism of claim 1, further comprising a detent operable (40) between the base frame portion (20) and the case frame portion (30), the detent (40) having: an engaged position where the case frame portion (30) is held in a selected position with respect to the base frame portion (20), and a disengaged position allowing the rotation about the pivot axis (12);
whereby the case frame portion (30), the base frame portion (20) and the spring tie (54) are mutually arranged and constructed such that, in the deployed position, a torque applied to the case frame portion (30) about the axis (13) orthogonal to the pivot axis (12) by an external force is resisted by the spring tie reaction feature.

3. The pivot mechanism of claim 1 or 2, wherein the spring tie reaction feature includes a plurality of spring tie reaction surfaces (541).

4. The pivot mechanism of claim 3, wherein the plurality of spring tie reaction surfaces (541) are circumferentially spaced apart around the spring tie shaft (54).

5. The pivot mechanism of claim 4, wherein each spring tie reaction surface (541) is located radially inboard of the internal radius of the compression spring (60).

6. The pivot mechanism of claim 2, wherein the compression spring (60) includes one or more disc springs.

7. The pivot mechanism of claim 2, wherein the spring (60) includes a first spring end (62) and a second spring end (68), the first spring end (62) compressed retained in compression against either one of the first and second tie ends (52, 58).

8. The pivot mechanism of claim 2, including a powerfold mechanism (100) operably interposed between the base frame portion (20) and the case frame portion (30),
wherein the powerfold mechanism (100) is operable to electrically drive the case frame portion (30) with respect to the base frame portion (20).

9. The pivot mechanism of claim 2, wherein the rear vision device is a rear vision mirror;
the detent (40) includes a first set of detent features (42) and a second set of detent features (46); the spring mechanism clamping the case frame portion (30) to the base frame portion (20) and the first set of detent features (42) to the second set of detent features (46);
a support arm (70) is provided, which has an attachment end (72) and a floating end (78), the floating end (78) supporting the first set of detent features (42), the first set of detent features (42) fixed against rotation about the pivot axis (12) with respect to the support arm (70), but displaceable relative to the attachment end (72) in a direction substantially parallel to the pivot axis (12); and
the powerfold mechanism (100) is operably interposed between the base frame portion (20) and the case frame portion (30), the powerfold mechanism (100) including the second set of detent features (46),
wherein the attachment end (72) of the support arm (70) is fixed to, and is fixed against rotation with respect to, one of: the case frame portion (30) and the base frame (20), and
wherein the second set of detent features (46) is fixed against rotation with respect to the other of: the case frame portion (30) and the base frame portion (20), and
wherein the powerfold mechanism (100) is operable to electrically drive the case frame portion (30) with respect to the base frame portion (20).

## Patentansprüche

1. Schwenkmechanismus (10) für eine äußere Fahrzeug-Rückblickanordnung, wobei der Schwenkmechanismus (10) folgendes umfasst:
einen Grundrahmenabschnitt (20), der mit einem am Fahrzeug montierbaren Grundrahmen (21) einstückig ausgebildet oder daran anbringbar ist;
einen Gehäuserahmenabschnitt (30), der zur Drehung um eine Schwenkachse (12) an dem Grundrahmenabschnitt (20) montiert ist, wobei der Gehäuserahmenabschnitt (30) mit einem Gehäuserahmen, der dafür ausgelegt ist, eine Rückblickvorrichtung zu tragen, einstückig ausgebildet oder daran anbringbar ist, wobei der Gehäuserahmen um die Schwenkachse (12) von einer ausgefahrenen Position in eine eingefahrene Position bewegbar ist;
einen Federmechanismus, der den Gehäuserahmenabschnitt (30) am Grundrahmen festklemmt,
wobei
der Federmechanismus folgendes umfasst:
eine Druckfeder (60), die um die Schwenkachse (12) angeordnet ist, wobei die Druckfeder (60) einen Innenradius aufweist; und
**dadurch gekennzeichnet, dass** der Federmechanismus ferner folgendes umfasst:
eine Federverbindung (50), wobei die Federverbindung (50) ein erstes Verbindungsende (52) und ein zweites Verbindungsende (58) aufweist, wobei das erste und zweite Verbindungsende (52, 58) voneinander beabstandet und durch eine Verbindungswelle (54) verbunden sind, wobei die Verbindungswelle (54) durch die Feder (60) verläuft, wobei die Federverbindungswelle ein Federverbindungsreaktionselement umfasst,
wobei das Federverbindungsreaktionselement in einer ausgefahrenen Position so positioniert ist, dass einer Drehung des Gehäuserahmenabschnitts um eine Achse (13) orthogonal zur Schwenkachse (12) durch das Federverbindungsreaktionselement entgegengewirkt wird.

2. Schwenkmechanismus nach Anspruch 1, ferner umfassend eine Arretierung (40), die zwischen dem Grundrahmenabschnitt (20) und dem Gehäuserahmenabschnitt (30) betätigbar ist, wobei die Arretierung (40) folgendes aufweist: eine Eingriffsposition, in welcher der Gehäuserahmenabschnitt (30) in Bezug auf den Grundrahmenabschnitt (20) in einer ausgewählten Position gehalten wird, und eine gelöste Position, welche die Drehung um die Schwenkachse (12) erlaubt;
wobei der Gehäuserahmenabschnitt (30), der Grundrahmenabschnitt (20) und die Federverbindung (54) so zueinander angeordnet und aufgebaut sind, dass in der ausgefahrenen Position einem Drehmoment, das am Gehäuserahmenabschnitt (30) um die Achse (13) orthogonal zur Schwenkachse (12) durch eine äußere Kraft aufgebracht wird, durch das Federverbindungsreaktionselement entgegengewirkt wird.

3. Schwenkmechanismus nach Anspruch 1 oder 2, wobei das Federverbindungsreaktionselement eine Mehrzahl von Federverbindungsreaktionsoberflächen (541) umfasst.

4. Schwenkmechanismus nach Anspruch 3, wobei die Mehrzahl von Federverbindungsreaktionsoberflächen (541) umlaufend rund um die Federverbindungswelle (54) beabstandet sind.

5. Schwenkmechanismus nach Anspruch 4, wobei jede Federverbindungsreaktionsoberfläche (541) radial innerhalb des Innenradius der Druckfeder (60) angeordnet ist.

6. Schwenkmechanismus nach Anspruch 2, wobei die Druckfeder (60) eine oder mehrere Tellerfedern umfasst.

7. Schwenkmechanismus nach Anspruch 2, wobei die Feder (60) ein erstes Federende (62) und ein zweites Federende (68) umfasst, wobei das erste Federende (62) gegen eines des ersten und zweiten Verbindungsendes (52, 58) gedrückt unter Druck gehalten wird.

8. Schwenkmechanismus nach Anspruch 2, umfassend einen Powerfold-Mechanismus (100), der zwischen dem Grundrahmenabschnitt (20) und dem Gehäuserahmenabschnitt (30) betätigbar angeordnet ist,
wobei der Powerfold-Mechanismus (100) betätigbar ist, um den Gehäuserahmenabschnitt (30) in Bezug auf den Grundrahmenabschnitt (20) elektrisch anzusteuern.

9. Schwenkmechanismus nach Anspruch 2, wobei die Rückblickvorrichtung ein Rückspiegel ist;
die Arretierung (40) einen ersten Satz von Arretierungselementen (42) und einen zweiten Satz von Arretierungselementen (46) umfasst;
wobei der Federmechanismus den Gehäuserahmenabschnitt (30) am Grundrahmenabschnitt (20) und den ersten Satz von Arretierungselementen (42) am zweiten Satz von Arretierungselementen (46) festklemmt;
ein Tragarm (70) bereitgestellt ist, der ein Befestigungsende (72) und ein gleitendes Ende (78) aufweist, wobei das gleitende Ende (78) den ersten Satz von Arretierungselementen (42) trägt, wobei der erste Satz von Arretierungselementen (42) gegen Drehung um die Schwenkachse (12) in Bezug auf den Tragarm (70) fixiert ist, aber relativ zum Befestigungsende (72) in einer Richtung im Wesentlichen parallel zu der Schwenkachse (12) versetzbar ist; und
der Powerfold-Mechanismus (100) zwischen dem Grundrahmenabschnitt (20) und dem Gehäuserahmenabschnitt (30) betätigbar angeordnet ist, wobei der Powerfold-Mechanismus (100) den zweiten Satz von Arretierungselementen (46) umfasst,
wobei das Befestigungsende (72) des Tragarms (70) an einem von dem Gehäuserahmenabschnitt (30) und dem Grundrahmen (20) fixiert ist und gegen Drehung in Bezug darauf fixiert ist, und wobei der zweite Satz von Arretierungselementen (46) gegen Drehung in Bezug auf den anderen von dem Gehäuserahmenabschnitt (30) und dem Grundrahmenabschnitt (20) fixiert ist und wobei der Powerfold-Mechanismus (100) betätigbar ist, um den Gehäuserahmenabschnitt (30) in Bezug auf den Grundrahmenabschnitt (20) elektrisch anzusteuern.

## Revendications

1. Mécanisme de pivotement (10) pour un ensemble de vision arrière extérieur d'un véhicule, ledit mécanisme de pivotement (10) comprenant :
une partie de cadre de base (20) intégrée à ou pouvant être fixée à un cadre de base (21) montable sur le véhicule;
une partie de cadre de boîtier (30) montée sur la partie de cadre de base (20) pour permettre une rotation autour d'un axe de pivotement (12), ladite partie de cadre de boîtier (30) étant intégrée à ou pouvant être fixée à un cadre de boîtier prévu pour supporter un dispositif de vision arrière, , ledit cadre de boîtier étant mobile autour de l'axe de pivotement (12) d'une position d'extension vers une position de rabattement ;
un mécanisme à ressort serrant la partie de cadre de boîtier (30) contre le cadre de base, ledit mécanisme à ressort comprenant :
un ressort de compression (60) disposé autour de l'axe de pivotement (12), ledit ressort de compression (60) ayant un rayon interne ; et
**caractérisé en ce que** le mécanisme à ressort comprend en outre
une attache de ressort (50), ladite attache de ressort (50) ayant une première extrémité d'attache (52) et une deuxième extrémité d'attache (58), la première et la deuxième extrémités d'attache (52, 58) étant espacées l'une de l'autre et reliées par une tige d'attache (54), ladite tige d'attache (54) passant dans le ressort (60), ladite tige d'attache de ressort présentant un élément de réaction d'attache de ressort,
ledit élément de réaction d'attache de ressort étant en position d'extension positionné de sorte que l'élément de réaction d'attache de ressort s'oppose à une rotation de la partie de cadre de boîtier autour d'un axe (13) orthogonal à l'axe de pivotement (12).

2. Mécanisme de pivotement selon la revendication 1, comprenant en outre un crantage actionnable (40) entre la partie de cadre de base (20) et la partie de cadre de boîtier (30), ledit crantage (40) présentant : une position d'enclenchement où la partie de cadre de boîtier (30) est maintenue dans une position sélectionnée par rapport à la partie de cadre de base (20), et une position de déclenchement permettant la rotation autour de l'axe de pivotement (12) ;
la partie de cadre de boîtier (30), la partie de cadre de base (20) et l'attache de ressort (54) étant mutuellemenent agencés et construits de sorte qu'en position d'extension, l'élément de réaction d'attache de ressort s'oppose à un couple appliqué par une force extérieure sur la partie de cadre de boîtier (30) autour de l'axe (13) orthogonal à l'axe de pivotement (12).

3. Mécanisme de pivotement selon la revendication 1 ou la revendication 2, où l'élément de réaction d'attache de ressort comprend une pluralité de surfaces de réaction (541) d'attache de ressort.

4. Mécanisme de pivotement selon la revendication 3, où les surfaces de la pluralité de surfaces de réaction (541) d'attache de ressort sont espacées sur la circonférence de la tige d'attache de ressort (54).

5. Mécanisme de pivotement selon la revendication 4, où chaque surface de réaction (541) d'attache de ressort est située radialement côté intérieur du rayon interne du ressort de compression (60).

6. Mécanisme de pivotement selon la revendication 2, où le ressort de compression (60) comprend une ou plusieurs rondelles-ressorts.

7. Mécanisme de pivotement selon la revendication 2, où le ressort (60) présente une première extrémité de ressort (62) et une deuxième extrémité de ressort (68), la première extrémité de ressort (62) étant maintenue comprimée contre la première ou contre la deuxième extrémités d'attache (52, 58).

8. Mécanisme de pivotement selon la revendication 2, comprenant un mécanisme de rabattement (100) fonctionnellement intercalé entre la partie de cadre de base (20) et la partie de cadre de boîtier (30),
ledit mécanisme de rabattement (100) étant actionnable pour entraîner électriquement la partie de cadre de boîtier (30) par rapport à la partie de cadre de base (20).

9. Mécanisme de pivotement selon la revendication 2, où le dispositif de vision arrière est un rétroviseur ;
le crantage (40) comprend un premier ensemble d'éléments de crantage (42) et un deuxième ensemble d'éléments de crantage (46) ;
le mécanisme à ressort serre la partie de cadre de boîtier (30) contre la partie de cadre de base (20) et le premier ensemble d'éléments de crantage (42) contre le deuxième ensemble d'éléments de crantage (46) ;
un bras de support (70) est prévu, lequel présente une extrémité de fixation (72) et une extrémité flottante (78), ladite extrémité flottante (78) supportant le premier ensemble d'éléments de crantage (42), le premier ensemble d'éléments de crantage (42) fixés contre une rotation autour de l'axe de pivotement (12) par rapport au bras de support (70), ceux-ci étant toutefois mobiles par rapport à l'extrémité de fixation (72) dans une direction sensiblement parallèle à l'axe de pivotement (12) ; et
le mécanisme de rabattement (100) est fonctionnellement intercalé entre la partie de cadre de base (20) et la partie de cadre de boîtier (30), ledit mécanisme de rabattement (100) comprenant le deuxième ensemble d'éléments de crantage (46),
l'extrémité de fixation (72) du bras de support (70) étant fixée soit à et fixés contre une rotation par rapport à la partie de cadre de boîtier (30) et le cadre de base (20), et
le deuxième ensemble d'éléments de crantage (46) étant fixés contre une rotation par rapport à la partie restante : la partie de cadre de boîtier (30) ou la partie de cadre de base (20), et
le mécanisme de rabattement (100) étant actionnable pour entraîner électriquement la partie de cadre de boîtier (30) par rapport à la partie de cadre de base (20).
